# EUROPEAN PATENT SPECIFICATION

(11) **EP 3 211 110 B1**
(45) Date of publication and mention of the grant of the patent: **09.12.2020**
(21) Application number: 15851725.0
(22) Date of filing: 22.10.2015
(51) Int. Cl.: C22C 38/42, C21D 8/00

(54) **HIGH STRENGTH AND HIGH DUCTILITY FERRITIC STAINLESS STEEL SHEET AND METHOD FOR PRODUCING SAME**
HOCHFESTES UND HOCHVERFORMBARES FERRITISCHES ROSTFREIES STAHLBLECH UND VERFAHREN ZUR HERSTELLUNG DAVON
TÔLE D'ACIER INOXYDABLE FERRITIQUE À HAUTE RÉSISTANCE ET DUCTILITÉ ÉLEVÉE ET SON PROCÉDÉ DE PRODUCTION

(30) Priority: 22.10.2014 KR 20140143292
(43) Date of publication of application: 30.08.2017
(73) Proprietor: POSCO, Gyeongsangbuk-do 790-300 (KR)
(72) Inventor: KIM, Sang Seok, Pohang-si Gyeongsangbuk-do 37584 (KR); KIM, Ji Eun, Ulsan 44760 (KR); PARK, Mi Nam, Pohang-si Gyeongsangbuk-do 37669 (KR); JUNG, Il Chan, Pohang-si Gyeongsangbuk-do 37859 (KR); PARK, Soo Ho, Pohang-si Gyeongsangbuk-do 37680 (KR)
(74) Representative: Potter Clarkson
(86) International application number: PCT/KR2015/011215
(87) International publication number: WO 2016/064226

(56) References cited:
- JP-A- S5 160 626
- JP-A- H09 268 350
- JP-A- 2004 197 197
- JP-A- 2006 169 622
- JP-A- 2008 088 534
- JP-A- 2009 030 078
- KR-A- 20110 075 408

## Description

### [Technical Field]

The present disclosure relates to a ferritic stainless steel sheet with high-strength and good elongation, and a method for manufacturing the same, and in particular, to a ferritic stainless steel sheet having good elongation while maintaining high-strength so as to be used as a fastener for automobiles and general hoses, and a method for manufacturing the same.

### [Background Art]

Ferritic stainless steel is, compared to austenite-based stainless steel, lower-priced, has a lower coefficient of thermal expansion and has favorable surface gloss, formability and oxidation resistance, and has been widely used in heat-resisting apparatuses, sink decks, exterior materials, home appliances, electronic components and the like.

A fastener used for automobiles or general hoses or the like is a part clamping a plastic hose or pipe. Accordingly, high strength is required, and elongation needs to be superior as well since no cracks should occur during bending. In addition, corrosion resistance is required due to the use in the outdoor environment such as automobiles as well as indoors, and the amount of stainless steel used as the material has increased.

Generally prepared utility ferrite such as 410UF has a chromium (Cr) content of approximately 12% and therefore has low corrosion resistance, and has a low elongation percentage as well, and is not able to be used as a fastener. Accordingly, there have been attempts to use 430 series having a relatively high chromium (Cr) content as the material, however, to be used as a fastener, there is a problem of low strength due to low tensile strength. Particularly, conditions such as tensile strength (TS) of 520 MPa or greater, yield strength (YS) of 205 MPa or greater and an elongation percentage (El) of 22% or greater need to be satisfied to be used as a fastener, and a surface degree also needs to satisfy a value of less than 200. For this, component system development and manufacturing process optimization need to be preceded.

Regarding major qualities in ferritic stainless steel represented by 430 series, a number of prior art technologies are present on improvements in ridging, improvements in orange peel, and improvements in deformity in a surface during forming, however, technology development on examination and optimization for component systems capable of satisfying both high-strength and good elongation so as to be used as a fastener for automobiles and general hoses has been urgently required.

JP2004197197A disclosed a ferrite type stainless steel plate for household articles, has specific composition, and crystal grain diameter inclination structure showing average grain size of ferrite decreasing gradually towards surface layer from board thickness center.

JP H09 268350 A discloses a ferrite single phase Cr-containing steel sheet manufactured from a steel stock having a composition in weight %, of ≤0.03% C, ≤4% Si, ≤2% Mn, 6 to 30% Cr, 0.2 to 1% Nb and ≤0.03% N and the balance Fe and incidental impurities. The manufacturing method includes hot rolling, cold rolling and subsequent cold rolled sheet annealing at 650 to 750°C.

### [Disclosure]

### [Technical Problem]

The present disclosure has been made in view of the above, and the present disclosure is directed to providing a ferritic stainless steel sheet controlling a content of a basic component system and controlling a content of carbon (C), silicon (Si) and nitrogen (N) so as to be used as a fastener, and capable of obtaining high-strength and good elongation by controlling a microstructure through annealing after hot rolling, and a method for manufacturing the same.

### [Technical Solution]

In view of the above, ferrite stainless steel having high-strength and good elongation according to one embodiment of the present disclosure includes, in wt%, C: 0.065% to 0.09%, N: 0.035% to 0.06%, Si: 0.6% to 1.0%, Mn: 0.01% to 0.70%, P: 0.001% to 0.035%, S: 0.001% to 0.005%, Cr: 15.0% to 17.0%, Ni: 0.001% to 0.50%, Cu: 0.001% to 0.50%, the remainder of Fe and unavoidable impurities, wherein a Γ=2^{∗}[Si]+10([C]+[N]) value is 2.2 or greater, and an area ratio Q=[area of non-annealed deformed structure]/[area of non-annealed deformed structure+area of recovered and recrystallized structure] on a microstructure of a transverse direction (TD) surface of the steel sheet after partial hot annealing is from 0.2 to 0.5.

Tensile strength TS₀, TS₄₅ and TS₉₀ values may all be 520 MPa or greater in three directions of 0°, 45° and 90° directions with respect to a rolling direction after cold annealing, and ξ₀, ξ₄₅ and ξ₉₀ values that are ξ=[TS(MPa)]+10[EL(%)] may all be 780 or greater in three directions of 0°, 45° and 90° directions with respect to the rolling direction.

A maximum concentration of Si included in a Si-oxide passive state layer formed on a surface of the steel sheet after bright annealing may be 20 wt% or greater.
A 10^{∗}[A(%)]+1000^{∗}[B(wt%)] value may be 6.5 or greater, wherein A is equilibrium austenite fraction at 1000°C and B is equilibrium carbon concentration present in austenite at 1000°C.

In addition, a method for manufacturing ferrite stainless steel with high-strength and good elongation according to one embodiment of the present disclosure includes preparing a slab including, in wt%, C: 0.065% to 0.09%, N: 0.035% to 0.06%, Si: 0.6% to 1.0%, Mn: 0.01% to 0.70%, P: 0.001% to 0.035%, S: 0.001% to 0.005%, Cr: 15.0% to 17.0%, Ni: 0.001% to 0.50%, Cu: 0.001% to 0.50%, the remainder of Fe and unavoidable impurities and having a Γ=2^{∗}[Si]+10([C]+[N]) value of 2.2 or great, and hot rolling, partially hot annealing, cold rolling and cold annealing the slab, wherein an area ratio (the following Q) value on a microstructure of a transverse direction surface (TD) of a steel sheet after the partial hot annealing satisfies 0.2 to 0.5. (Ω =[area of non-annealed deformed structure]/[area of non-annealed deformed structure+area of recovered and recrystallized structure]).

The partial hot annealing may be batch annealing the hot rolled steel sheet for 3 hours to 5 hours in a temperature range of 780°C to 850°C.

By carrying out bright annealing in a range of 800°C to 900°C after the cold annealing, a maximum concentration of Si included in a Si-oxide passive state layer formed on a surface of the steel sheet may be 20 wt% or greater.

### [Advantageous Effects]

According to ferritic stainless steel with high-strength and good elongation and a method for manufacturing the same of the present disclosure, an elongation percentage may be enhanced while maintaining tensile strength at a level of 520 MPa or greater by adjusting a component system, and as a result, ferritic stainless steel favorably maintaining properties of both high-strength and good elongation, and having enhanced corrosion resistance by a passive state layer of silicon and a chromium oxide on the surface.

### [Description of Drawings]

FIG. 1 is a graph showing a [TSo(MPa)]+10[ELo(%)] value depending on a 2^{∗}[Si]+10([C]+[N]) value of ferritic stainless steel according to the present disclosure.
FIG. 2 is a surface picture of a present disclosure example and a comparative example in which an annealed microstructure of a transverse direction (TD) surface after hot annealing satisfies an {area of non-annealed deformed structure}/{area of non-annealed deformed structure+area of recovered and recrystallized structure} ratio of greater than or equal to 0.2 and less than or equal to 0.5.
FIG. 3 is a graph comparing a present disclosure example and a comparative example on microhardness (Hv) of a transverse direction (TD) surface after hot annealing.
FIG. 4 is a graph showing a 10^{∗}A+1000^{∗}B value formed with an equilibrium austenite fraction (A or γMAX) of a stainless steel sheet according to the present disclosure at 1000°C and an equilibrium carbon concentration (B) present in the austenite at 1000°C.
FIG. 5 is a graph showing average microhardness (Hv) of a transverse direction (TD) surface of a hot rolled product depending on an annealing temperature of a batch annealing furnace (BAF) for general 430 (C 400 ppm), a C increased material (C 750 ppm), and a C increased and Si additive.
FIG. 6 is a graph showing elemental distribution of an extreme surface layer when analyzing a surface of a cold rolled product using glow discharge spectroscopy (GDS).
FIG. 7 is a photograph of corrosion and rust after a cyclic corrosion evaluation.

### [Mode for Disclosure]

Hereinafter, ferritic stainless steel with high-strength and good elongation according to preferred embodiments of the present disclosure will be described with reference to the accompanying drawings.

Stainless steel according to the present disclosure includes, in a weight percent (wt%), carbon (C): 0.065% to 0.09%, nitrogen (N) : 0.035% to 0.06%, silicon (Si): 0.6% to 1.0%, manganese (Mn): 0.01% to 0.70%, phosphorous (P): 0.001% to 0.035%, sulfur (S) : 0.001% to 0.005%, chromium (Cr) : 15.0% to 17.0%, nickel (Ni) : 0.001% to 0.50%, copper (Cu) : 0.001% to 0.50%, the remainder of iron (Fe) and unavoidable impurities, wherein a Γ=2^{∗}[Si]+10([C]+[N]) value is 2.2 or greater, and a microstructure of a transverse direction (TD) surface of the steel sheet after hot annealing has Q=[area of non-annealed deformed structure]/[area of non-annealed deformed structure+area of recovered and recrystallized structure] of 0.2 to 0.5.

Herein, reasons for limiting the component system will be described. The content ranges of the components are in a weight percent (wt%) unless particularly mentioned otherwise.

### Carbon (C): 0.065% to 0.09%

Carbon (C) is a component capable of enhancing strength by being precipitated as (Cr,Fe)₂₃C₆ and (Cr,Fe)₇C₃ carbides in a batch annealing process. However, when added to the steel sheet in excess, an elongation percentage decreases significantly reducing workability of a product, and the content is limited to the above-mentioned range.

### Nitrogen (N): 0.035% to 0.06%

Nitrogen (N) is present as an impurity element equally with carbon, and is a component capable of enhancing strength by being precipitated as a Cr₂N nitride in the batch annealing process together with carbon. However, when added to the steel sheet in excess, nitrogen becomes a cause of stretcher strain of a cold rolled product as well as reducing workability, and therefore, the content is limited to the above-mentioned range.

### Silicon (Si): 0.6% to 1.0%

Silicon (Si) is an element added as a deoxidizer during steelmaking and is a ferrite-stabilizing element. Containing silicon in excess in stainless steel commonly causes curing of a material reducing elongation, and therefore, the content is managed at 0.4% or less. However, silicon needs to be optimally used in the present disclosure so as to be used as a material of a fastener for automobiles. The present disclosure enhances tensile strength and yield strength with a solid solution strengthening effect obtained by increasing the silicon content, but when added in excess, an elongation percentage decreases, and therefore, the content is limited to the above-mentioned range.

### Manganese (Mn): 0.01% to 0.70%

Manganese (Mn) is an austenite-stabilizing element, and performs a role of suppressing roping and ridging. When included in excess, manganese-based fumes are produced during welding causing a MnS phase precipitation and reducing an elongation percentage, and therefore, the content is limited to the above-mentioned range.

### Phosphorous (P): 0.001% to 0.035%

Phosphorous causes intergranular corrosion during acid cleaning or inhibits hot working, and therefore, the content is limited to the above-mentioned range.

### Sulfur (S): 0.001% to 0.005%

Sulfur (S) inhibits hot working by being segregated to a grain boundary, and therefore, the content is limited to the above-mentioned range.

### Chromium (Cr): 15.0% to 17.0%

Chromium (Cr) is an alloy element added for enhancing corrosion resistance of steel, and a critical content of the chromium is 12 wt%. However, stainless steel including carbon and nitrogen may experience intergranular corrosion, and the content is limited to the above-mentioned range considering intergranular corrosion possibility and an increase in the manufacturing costs.

### Nickel (Ni): 0.001% to 0.50%

Nickel (Ni) is an austenite-stabilizing element together with copper and manganese, and is effective in suppressing roping and ridging by increasing an austenite fraction, and performs a role of enhancing corrosion resistance with a very small amount added. However, when added in excess, workability is deteriorated and manufacturing costs increase, and therefore, the content is limited to the above-mentioned range.

### Copper (Cu): 0.01% to 0.50%

Copper (Cu) is an austenite-stabilizing element together with nickel and manganese, and is effective in suppressing roping and ridging by increasing an austenite fraction and performs a role of enhancing corrosion resistance with a very small amount added. However, when added in excess, workability is deteriorated and manufacturing costs increase, and therefore, the content is limited to the above-mentioned range.

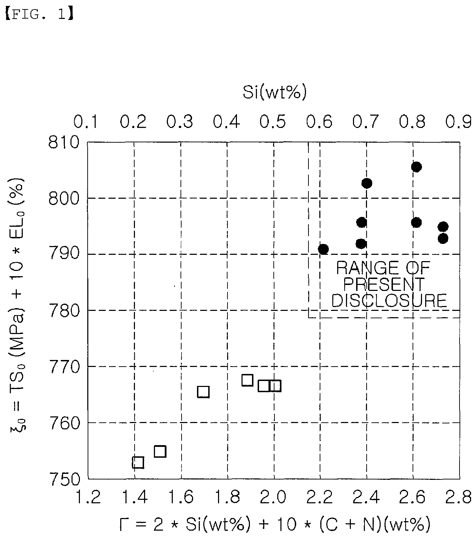

In addition, the 2^{∗}[Si]+10([C]+[N]) value is 2.2 or greater. In other words, by gaining both a solid solution strengthening effect of a matrix with an increase in the silicon content and a chromium carbide precipitation strengthening effect with an increase in the carbon content, tensile strength and elongation, tensile properties of a cold rolled product, may both be enhanced. When referring to FIG. 1, a ferritic stainless steel sheet with high-strength and good elongation satisfying a [TS₀(MPa)]+10[EL₀(%)] value of 780 while maintaining a strength with tensile strength of 520 MPa or greater may be obtained by controlling the content of Si, C and N.

In the present disclosure, an [area of non-annealed deformed structure]/[area of non-annealed deformed structure+area of recovered and recrystallized structure] value that is an area ratio (Ω) on a microstructure of a transverse direction (TD) surface of the steel sheet after hot rolling and then hot annealing the slab prepared in the above-mentioned composition is from 0.2 to 0.5. The non-annealed deformed structure in the present disclosure is a deformation band structure formed by the hot rolling and means a state before recovery or recrystallization of the metal structure. The non-annealed deformed structure increases an average thickness layer hardness value of a hot rolled product and ultimately performs a role of enhancing tensile strength of the cold rolled product. When the area ratio (Ω) on the microstructure is less than 0.2, tensile strength is not sufficiently enhanced, and when the area ratio (Ω) on the microstructure is greater than 0.5, workability is not secured due to low elongation, and therefore, the ratio is limited to the above-mentioned range.

The ferritic stainless steel sheet with high-strength and good elongation preferably has a 10^{∗}[A(%)]+1000^{∗}[B(wt%)] value of 6.5 or greater. Herein, A and B are an equilibrium austenite fraction at 1000°C and an equilibrium carbon concentration present in the austenite at 1000°C, respectively. It is seen in the present disclosure that, as austenite-stabilizing elements increase, an austenite phase fraction increases accordingly, and an equilibrium carbon concentration present in the austenite also increases. When the 10^{∗}[A(%)]+1000^{∗}[B(wt%)] value is greater than 6.5 as above, [TS(MPa)]+10[EL(%)] becomes 780 or greater.

A method for manufacturing a ferritic stainless steel sheet with high-strength and good elongation according to one embodiment of the present specification includes partially annealing a hot rolled steel sheet including carbon (C): 0.065% to 0.09%, nitrogen (N): 0.035% to 0.06%, silicon (Si): 0.6% to 1.0%, manganese (Mn): 0.01% to 0.70%, phosphorous (P): 0.001% to 0.035%, sulfur (S): 0.001% to 0.005%, chromium (Cr): 15.0% to 17.0%, nickel (Ni): 0.001% to 0.50%, copper (Cu): 0.001% to 0.50%, the remainder of iron (Fe) and unavoidable impurities and having a 2^{∗}[Si]+10([C]+[N]) value of 2.2 or greater so that a microstructure of a transverse direction (TD) surface of the steel sheet has [area of non-annealed deformed structure]/[area of non-annealed deformed structure+area of recovered and recrystallized structure] of 0.2 to 0.5.

The partial annealing means that a deformation band remains compared to recrystallized structure occupying 100% by whole recovery annealing of a hot rolled product. In this case, a non-annealed deformation band is present and the area ratio (Ω) on the microstructure is controlled to 0.2 to 0.5, and as a result, microhardness (Hv) of a transverse direction (TD) surface of the hot annealed product may be greater than or equal to 160 and less than 190 in the whole thickness range.

The process of partial annealing is preferably carried out as batch annealing in a temperature range of 780°C to 850°C. The batch annealing temperature is a temperature capable of mixing a partially annealed recrystallized structure and a non-annealed deformation band, and when annealed at a too high temperature, the non-annealed deformed structure is difficult to form and tensile strength is difficult to secure, and when annealed at a low temperature, the recrystallized structure is difficult to secure and an elongation percentage is difficult to secure, and therefore, the temperature is limited to the above-mentioned range.

The steel sheet hot annealed as above goes through cold rolling using a common method, and then is prepared into a final steel sheet, and it is obvious that other additional processes may be added as necessary.

In addition, the method for manufacturing a ferritic stainless steel sheet with high-strength and good elongation according to one embodiment of the present disclosure may further include a process of bright annealing (BA) the steel sheet after cold rolling at 800°C to 900°C based on the material temperature. When going through the bright annealing, a maximum concentration (wt%) of Si observed in a Si-oxide passive state layer produced in an extreme surface layer (to 15 nm) compared to a Cr-oxide passive state layer is observed as 20 or greater, and in this case, corrosion resistance may be significantly enhanced.

Hereinafter, the present disclosure will be described in more detail with reference to examples.

In Table 1, the ferritic stainless steel according to the present disclosure is changed to alloy components, and the steel types are divided into present disclosure examples and comparative examples.

**[Table 1]**

| Steel Type | Alloy Component (wt%) | | | | | | | Note |
|---|---|---|---|---|---|---|---|---|
| | C | Si | Mn | Cr | Ni | Cu | N | |
| A | 0.065 | 0.60 | 0.3 | 16.5 | 0.1 | 0.1 | 0.035 | Present Disclosure Example |
| B | 0.070 | 0.65 | 0.3 | 16.2 | 0.1 | 0.1 | 0.040 | |
| C | 0.080 | 0.70 | 0.3 | 16.2 | 0.1 | 0.1 | 0.040 | |
| D | 0.085 | 0.60 | 0.3 | 16.2 | 0.1 | 0.1 | 0.040 | |
| E | 0.075 | 0.60 | 0.3 | 16.2 | 0.1 | 0.1 | 0.050 | |
| F | 0.080 | 0.80 | 0.3 | 16.2 | 0.1 | 0.1 | 0.035 | |
| G | 0.070 | 0.80 | 0.3 | 16.2 | 0.1 | 0.1 | 0.045 | |
| H | 0.040 | 0.30 | 0.3 | 16.2 | 0.1 | 0.1 | 0.040 | Comparative Example |
| I | 0.050 | 0.30 | 0.3 | 16.2 | 0.1 | 0.1 | 0.045 | |
| J | 0.070 | 0.30 | 0.3 | 16.2 | 0.1 | 0.1 | 0.040 | |
| K | 0.080 | 0.30 | 0.3 | 16.2 | 0.1 | 0.1 | 0.045 | |
| L | 0.030 | 0.60 | 0.3 | 16.2 | 0.1 | 0.1 | 0.040 | |
| M | 0.040 | 0.60 | 0.3 | 16.2 | 0.1 | 0.1 | 0.040 | |
| N | 0.065 | 0.60 | 0.3 | 13.2 | 0.1 | 0.1 | 0.035 | |
| O | 0.070 | 0.60 | 0.3 | 13.4 | 0.1 | 0.1 | 0.040 | |

For the steel types described in Table 1, the slab produced in a continuous casting process was reheated for 60 minutes at a soaking zone temperature of 1,180°C in a heating furnace, and rolled at a finishing temperature of 800°C or higher using a roughing mill and a continuous finishing mill to prepare a hot rolled sheet, and in hot batch annealing after that, the temperature was raised with 0.1°C/s or higher from room temperature to 500°C and with 0.01°C/s or lower in a temperature range of 780°C to 850°C, based on a temperature of an inner winding part that is an innermost part of the coil, and the temperature was maintained in a temperature range of 780°C to 850°C while varying time. After that, batch annealing heat treatment lowering the temperature with 0.015°C/s or lower to 500°C, and with 0.03°C/s or lower to room temperature was carried out.

Table 2 shows values defined by Γ=2^{∗}Si(wt%)+10^{∗}(C+N) (wt%) for the component systems having the alloy components of Table 1, and also shows values defined by an area ratio Ω=[area of non-annealed deformed structure]/[area of non-annealed deformed structure+area of recovered and recrystallized structure] on a microstructure of a transverse direction (TD) surface of the hot rolled product after carrying out annealing while changing the hot batch annealing condition. Herein, non-annealed deformed structure is a deformation band structure formed by the hot rolling and means a state before recovery or recrystallization of the metal structure. ξ represents a value defined by TS(MPa)+10^{∗}El(%). On the sheet surface, the ξ₀ value in a 0° direction with respect to the rolling direction is a value obtained using tensile strength (TS) and elongation percentage (El) values obtained in a tensile test of the cold rolled product.

The tensile test for obtaining tensile strength in Table 2 was carried out in accordance with JIS Z 2241 by collecting a B-type tensile test specimen of JIS13 in a 0° direction with respect to the rolling direction on the sheet surface. The temperature during the tensile test was room temperature, and a crosshead speed that is a deformation speed was 20 mm/min.

**[Table 2]**

| Steel Type | Γ=2^{∗}S i+10^{∗} ( C+N) | BAF Heat Treatment Temperature (°C) | BAF Heat Treatment Duration (Hr) | Ω=Area Ratio on Microstr ucture | ξ₀=TS (MPa) + 10*E1( %) | Note |
|---|---|---|---|---|---|---|
| A | 2.20 | 840 | 4 hr | 0.21 | 790 | Present Disclosure Example |
| B | 2.40 | 830 | 5 hr | 0.25 | 792 | |
| C | 2.60 | 820 | 5 hr | 0.25 | 805 | |
| D | 2.40 | 850 | 5 hr | 0.21 | 795 | |
| E | 2.40 | 780 | 3 hr | 0.4 | 802 | |
| F | 2.75 | 790 | 3 hr | 0.4 | 793 | |
| G | 2.75 | 790 | 5 hr | 0.35 | 792 | |
| H | 1.40 | 820 | 10 hr | 0.05 | 752 | Comparative Example |
| I | 1.55 | 800 | 10 hr | 0.05 | 753 | |
| J | 1.70 | 830 | 7 hr | 0.25 | 766 | |
| K | 1.85 | 830 | 7 hr | 0.25 | 768 | |
| L | 1.90 | 780 | 10 hr | 0.04 | 767 | |
| M | 2.00 | 780 | 10 hr | 0.04 | 767 | |
| N | 2.20 | 780 | 4 hr | 0.21 | 791 | |
| O | 2.30 | 800 | 5 hr | 0.25 | 789 | |

A to G steel types are ferritic stainless steel controlling carbon (C), nitrogen (N), silicon (Si) and Γ=2Si+10(C+N) and vacuum dissolving, and the steel was reheated for 60 minutes at a soaking zone temperature of 1,180°C in a heating furnace in the form of a slab, and rolled at a finishing temperature of 800°C or higher using a roughing mill and a continuous finishing mill to prepare a hot rolled sheet, and after that, hot batch annealing was carried out, and cold rolling and cold annealing were carried out.

It was seen that A to G steel types satisfied Γ≥2.2. In addition, A to G steel types satisfied 0.2≤Ω≤0.5. Furthermore, A to G steel types satisfied ξ≥780.

It was seen that H steel type and I steel type had Γ values of 1.4 and 1.55, respectively, which were outside the Γ value range of the present disclosure. It was identified that a precipitation strengthening effect obtained by Cr-carbide precipitates was low since both the C content and the Si content were low, and a solid solution strengthening effect of a matrix was reduced since the Si content was low, and accordingly, the ξ value of the cold rolled product was outside the range of the present disclosure.

It was seen that J steel type and K steel type had Γ values of 1.7 and 1.85, respectively, which were relatively higher than H steel type or I steel type, however, the values were outside the Γ value range of the present disclosure. It was identified that J steel type and K steel type had a high C content leading to a sufficiently high precipitation strengthening effect obtained by Cr-carbide precipitates, however, a solid solution strengthening effect of a matrix was reduced with a low Si content, and accordingly, the ξ value of the cold rolled product was outside the range of the present disclosure.

It was seen that L steel type and M steel type had Γ values of 1.9 and 2.0, respectively, which were relatively higher than H steel type or I steel type, however, the values were outside the Γ value range of the present disclosure. It was identified that L steel type and M steel type had a high Si content leading to a solid solution strengthening effect of a matrix, but had a low C content and thereby had a low precipitation strengthening effect obtained by Cr-carbide precipitates, and accordingly, the ξ value of the cold rolled product was outside the range of the present disclosure.

It was identified that N steel type and O steel type had Γ values of 2.2 to 2.3 satisfying the Γ value of the present disclosure, and had both high C content and Si content, and therefore, the ξ value of the cold rolled product belonged to the range of the present disclosure with a precipitation strengthening effect obtained by Cr-carbide precipitates and a solid solution effect obtained by Si, however, the Cr content was approximately 13% not satisfying corrosion resistance required for automotive and general fasteners and was outside the range of the present disclosure.

For the component systems having the alloy components of Table 1, results of carrying out a tensile test in accordance with JIS Z 2241 collecting a B-type tensile test specimen of JIS13 in 3 directions of a 0°, 45° and 90° directions with respect to the rolling direction on the sheet surface of the cold rolled product are shown in the following Table 3. The temperature during the tensile test was room temperature, and the tensile test was carried out with a crosshead speed that is a deformation speed of 20 mm/min. Values calculating the ξ value as ξ₀, ξ₄₅ and ξ₉₀ values are shown using tensile strength (TS) and El (%) values obtained in each direction.

**[Table 3]**

| Steel Type | Tensile Strength (TS, MPa) | | | Elongation Percentage (El, %) | | | ξ | | | Note |
|---|---|---|---|---|---|---|---|---|---|---|
| | TS₀ | TS₄₅ | TS₉₀ | El₀ | El₄₅ | El₉₀ | ξ₀ | ξ₄₅ | ξ₉₀ | |
| A | 523 | 536 | 561 | 26.7 | 28.2 | 26.2 | 790 | 818 | 823 | Present Disclosure Example |
| B | 530 | 537 | 563 | 26.2 | 27.3 | 26.0 | 792 | 810 | 823 | |
| C | 550 | 567 | 581 | 25.5 | 26.2 | 24.7 | 805 | 829 | 828 | |
| D | 535 | 540 | 574 | 26.0 | 26.8 | 25.1 | 795 | 808 | 825 | |
| E | 545 | 559 | 575 | 25.7 | 26.0 | 24.5 | 802 | 819 | 820 | |
| F | 563 | 571 | 585 | 23.0 | 23.7 | 22.2 | 793 | 808 | 807 | |
| G | 552 | 565 | 579 | 24.0 | 24.4 | 23.2 | 792 | 809 | 811 | |
| H | 472 | 470 | 477 | 28.0 | 27.5 | 27.9 | 752 | 745 | 756 | Comparative Example |
| I | 478 | 475 | 483 | 27.5 | 27.2 | 27.7 | 753 | 747 | 760 | |
| J | 498 | 491 | 503 | 26.8 | 26.3 | 26.6 | 766 | 754 | 769 | |
| K | 502 | 498 | 505 | 26.6 | 26.1 | 26.5 | 768 | 759 | 770 | |
| L | 505 | 501 | 511 | 26.2 | 25.3 | 26.0 | 767 | 754 | 771 | |
| M | 507 | 504 | 514 | 26.0 | 25.8 | 26.2 | 767 | 762 | 776 | |

In A to G steel types, TSo, TS₄₅ and TS₉₀ values were all 520 MPa or greater and ξ₀, ξ₄₅ and ξ₉₀ values were all 780 or greater in all 3 directions of 0°, 45° and 90° directions with respect to the rolling direction on the sheet surface.

It was seen that, in the comparative examples of H to M steel types, TS₀, TS₄₅ and TS₉₀ values were all less than 520 MPa and ξ₀, ξ₄₅ and ξ₉₀ values were all less than 780 in all 3 directions of 0°, 45° and 90° directions with respect to the rolling direction on the sheet surface.

FIG. 1 is a graph showing the [TS₀(MPa)] +10 [EL₀(%)] value depending on the 2^{∗}[Si]+10([C]+[N]) value. When referring to FIG. 1, it was seen that, by controlling the 2^{∗}[Si]+10([C]+[N]) value to 2.2 in the present disclosure, both a solid solution strengthening effect of a matrix obtained by a Si content increase and a Cr-Carbide precipitation strengthening effect obtained by a C content increase were obtained, and therefore, the ξ=TS₀(MPa)+10^{∗}El₀(%) value increasing both tensile strength and elongation that are tensile properties of the cold rolled product was 780 or greater.

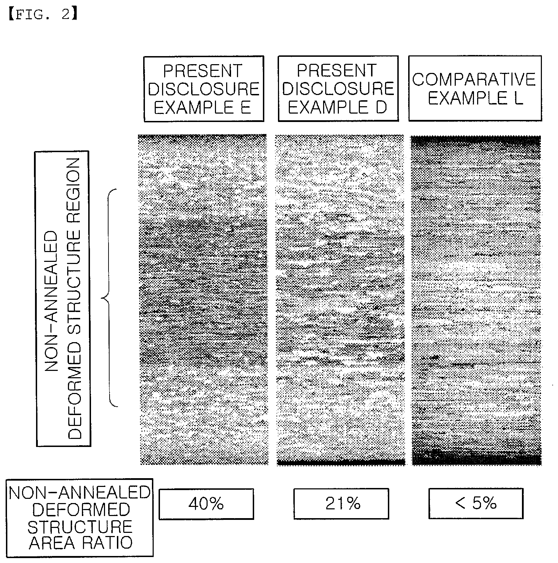

FIG. 2 is a surface picture of the present disclosure examples and the comparative example in which an area ratio (Ω) [area of non-annealed deformed structure]/[area of non-annealed deformed structure+area of recovered and recrystallized structure] on a microstructure of the transverse direction (TD) surface after hot annealing satisfies greater than or equal to 0.2 and less than or equal to 0.5. FIG. 2 shows microstructures of present disclosure examples E (Ω=0.4) and D (Ω=0.21) as the present disclosure example, and shows a microstructure of comparative example L (Ω=0.04) for relatively comparing the structure.

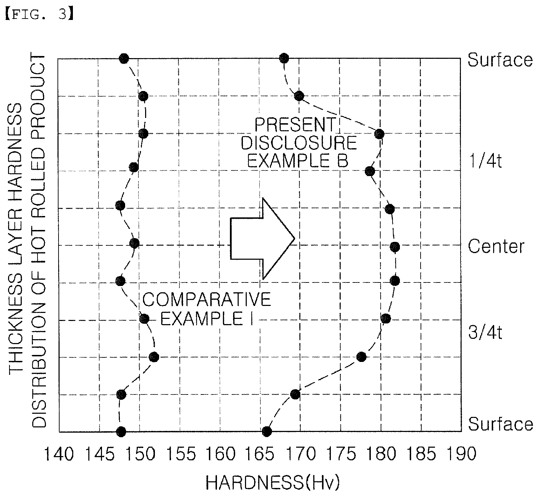

FIG. 3 is a graph comparing present disclosure example B and comparative example I on microhardness (Hv) of the transverse direction (TD) surface after hot annealing.

When referring to FIG. 2 and FIG. 3, it was seen that, by deducing a proper annealing condition depending on the components in a batch annealing furnace (BAF) for obtaining high-strength, that is, by introducing a partial annealing method allowing the remaining of a non-annealed deformation band instead of obtaining 100% of completely annealing recovered and recrystallized structure of the hot rolled product, the area ratio (Ω) on the microstructure was controlled to 0.2 to 0.5, and microhardness (Hv) of a transverse direction (TD) surface of the hot annealed product was greater than or equal to 160 and less than 190 in the whole thickness range. In FIG. 3, example B was an example of the present disclosure, and I was an example of the comparative example.

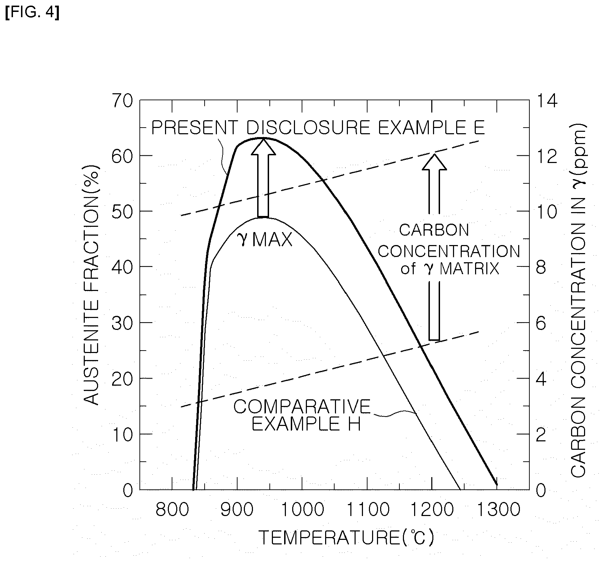

FIG. 4 is a graph showing a 10^{∗}A+1000^{∗}B value formed with an equilibrium austenite fraction (A or γMAX) of the stainless steel sheet according to the present disclosure at 1000°C and an equilibrium carbon concentration (B) present in the austenite at 1000°C. In the present disclosure, the value was 6.5 or greater. In FIG. 4, example E was an example of the present disclosure, and example H was an example of the comparative example.

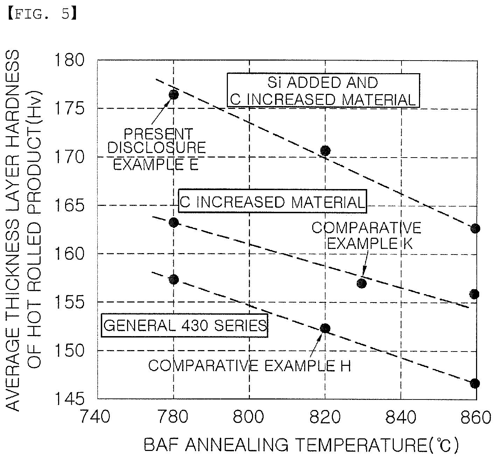

FIG. 5 is a graph showing average microhardness (Hv) of a transverse direction (TD) surface of the hot rolled product depending on an annealing temperature of a batch annealing furnace (BAF) for general 430 (C 400 ppm, example H), a C increased material (C 800 ppm, example K), and a C increased and Si additive (example E) . It was identified that as the C content increased, the average thickness layer hardness value of the hot rolled product significantly increased compared to existing 430 series with the C content increase and the Si complex addition. As described above, this may be explained as a precipitation strengthening effect obtained by Cr-carbide precipitates and a solid solution effect obtained by Si.

In order for identifying corrosion resistance enhancement obtained by bright annealing after cold rolling, the surface of the cold rolled product was analyzed using glow discharge spectroscopy (GDS) after bright annealing, and a cyclic corrosion evaluation was carried out. The cyclic corrosion evaluation was carried out as 3 cycles. The first cycle was carried out for 2 hours at 35°C±1°C with salt spray, the second cycle was carried out in a dry state for 4 hours at 60°C±1°C under humidity of 30% or less, and the third cycle was carried out for 2 hours at 50°C±1°C under humidity of 95% or higher.

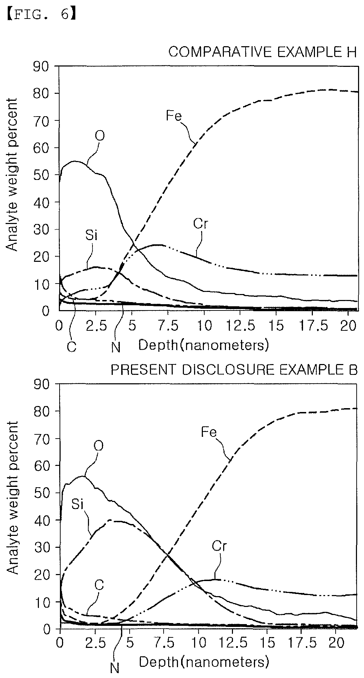

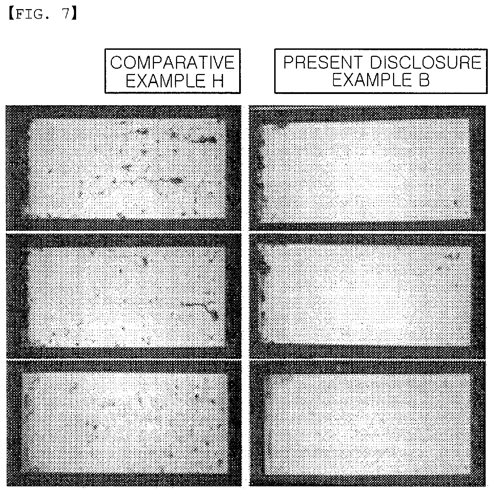

FIG. 6 is a graph showing elemental distribution of an extreme surface layer when analyzing a surface of the cold rolled product using glow discharge spectroscopy (GDS). FIG. 7 is a photograph of corrosion and rust after the cyclic corrosion evaluation.

When referring to FIG. 6 and FIG. 7, a maximum concentration (wt%) of Si observed in the Si-oxide passive state layer produced in an extreme surface layer (to 15 nm) compared to the Cr-oxide passive state layer was observed as 20 or greater when analyzing the surface of the cold rolled product gone through a bright annealing (BA) heat treatment process of greater than or equal to 800°C and less than or equal to 900°C using glow discharge spectroscopy (GDS) in the present disclosure example increasing the Si content compared to the existing 430 series, and when observing the corrosion and rust photograph and the area ratio after the cyclic corrosion evaluation, it was identified that the cold rolled product of the present disclosure having an increased Si content compared to existing 430 series had significantly increased corrosion resistance (effect of reducing rust produced area ratio).

Hereinbefore, embodiments of the present disclosure have been described with reference to the accompanying drawings, however, it is to be understood that those having common knowledge in the art to which the present disclosure belongs may implement the present disclosure in other specific forms without modifying technological ideas or essential characteristics of the present disclosure.

Therefore, embodiments described above need to be understood as illustrative rather than limitative in all aspects. The scope of the present disclosure is represented by the attached claims rather than the detailed descriptions provided above.

## Claims

1. Ferrite stainless steel with excellent strength and elongation comprising, in wt%, C: 0.065% to 0.09%, N: 0.035% to 0.06%, Si: 0.6% to 1.0%, Mn: 0.01% to 0.70%, P: 0.001% to 0.035%, S: 0.001% to 0.005%, Cr: 15.0% to 17.0%, Ni: 0.001% to 0.50%, Cu: 0.001% to 0.50%, the remainder of Fe and unavoidable impurities,
wherein a Γ=2^{∗}[Si]+10([C]+[N]) value is 2.2 or greater, and an area ratio Q=[area of non-annealed deformed structure]/[area of non-annealed deformed structure+area of recovered and recrystallized structure] on a microstructure of a transverse direction surface of the steel sheet after partial hot annealing is from 0.2 to 0.5.

2. The ferrite stainless steel with excellent strength and elongation of Claim 1, wherein tensile strength TSo, TS₄₅ and TS₉₀ values are all 520 MPa or greater in three directions of 0°, 45° and 90° directions with respect to a rolling direction after cold annealing, and ξ₀, ξ₄₅ and ξ₉₀ values that are ξ=[TS(MPa)]+10[EL(%)] are all 780 or greater in three directions of 0°, 45° and 90° directions with respect to the rolling direction.

3. The ferrite stainless steel with excellent strength and elongation of Claim 1, wherein a maximum concentration of Si included in a Si-oxide passive state layer formed on a surface of the steel sheet after bright annealing is 20 wt% or greater.

4. The ferrite stainless steel with excellent strength and elongation of Claim 1, wherein a 10*[A(%)]+1000*[B(wt%)] value is 6.5 or greater, wherein A is equilibrium austenite fraction at 1000°C and B is equilibrium carbon concentration present in austenite at 1000°C.

5. A method for manufacturing ferrite stainless steel with excellent strength and elongation comprising:
preparing a slab including, in wt%, C: 0.065% to 0.09%, N: 0.035% to 0.06%, Si: 0.6% to 1.0%, Mn: 0.01% to 0.70%, P: 0.001% to 0.035%, S: 0.001% to 0.005%, Cr: 15.0% to 17.0%, Ni: 0.001% to 0.50%, Cu: 0.001% to 0.50%, the remainder of Fe and unavoidable impurities, and having a Γ=2^{∗}[Si]+10([C]+[N]) value of 2.2 or great; and
hot rolling, partially hot annealing, cold rolling and cold annealing the slab,
wherein an area ratio (the following Ω) value on a microstructure of a transverse direction surface of the steel sheet after the partial hot annealing satisfies 0.2 to 0.5. (Ω =[area of non-annealed deformed structure]/[area of non-annealed deformed structure+area of recovered and recrystallized structure])

6. The method for manufacturing ferrite stainless steel with excellent strength and elongation of Claim 5, wherein the partial hot annealing is batch annealing the hot rolled steel sheet for 3 hours to 5 hours in a temperature range of 780°C to 850°C.

7. The method for manufacturing ferrite stainless steel with excellent strength and elongation of Claim 5, wherein tensile strength (TS) of the steel sheet gone through cold annealing is 520 MPa or greater, and a ξ=[TS(MPa)]+10[EL(%)] value is 780 or greater.

8. The method for manufacturing ferrite stainless steel with excellent strength and elongation of Claim 5, wherein, by carrying out bright annealing in a range of 800°C to 900°C after the cold annealing, a maximum concentration of Si included in a Si-oxide passive state layer formed on a surface of the steel sheet is 20 wt% or greater.

## Patentansprüche

1. Ferritedelstahl mit ausgezeichneter Festigkeit und Dehnung, umfassend, in Gew.-%, C: 0,065 % bis 0,09 %, N: 0,035 % bis 0,06 %, Si: 0,6 % bis 1,0 %, Mn: 0,01 % bis 0,70 %, P: 0,001 % bis 0,035 %, S: 0,001 % bis 0,005 %, Cr: 15,0 % bis 17,0 %, Ni: 0,001% bis 0,50 %, Cu: 0,001 % bis 0,50 %, den Rest Fe und unvermeidbare Verunreinigungen,
wobei ein Wert von Γ=2^{∗}[Si]+10([C]+[N]) 2,2 oder größer ist und ein Flächenverhältnis Ω=[Fläche der nicht geglühten verformten Struktur]/[Fläche der nicht geglühten verformten Struktur+Fläche der rückgewonnenen und rekristallisierten Struktur] auf einer Mikrostruktur einer Querrichtungsoberfläche des Stahlblechs nach einem teilweisen Warmglühen 0,2 bis 0,5 beträgt.

2. Ferritedelstahl mit ausgezeichneter Festigkeit und Dehnung nach Anspruch 1, wobei die Werte der Zugfestigkeit TSo, TS₄₅ und TS₉₀ alle 520 MPa oder größer in drei Richtungen einer 0°-, 45°- und 90°-Richtung hinsichtlich einer Walzrichtung nach einem Kaltglühen sind und die Werte von ξ₀, ξ₄₅ und ξ₉₀, die ξ= [TS (MPa)]+10 [EL (%)] sind, alle 780 oder größer in drei Richtungen einer 0°-, 45°- und 90°-Richtung hinsichtlich der Walzrichtung sind.

3. Ferritedelstahl mit ausgezeichneter Festigkeit und Dehnung nach Anspruch 1, wobei die maximale Si-Konzentration, die in einer Passivzustandsschicht eines Si-Oxids beinhaltet ist, die auf einer Oberfläche des Stahlblechs nach einem Blankglühen ausgebildet ist, 20 Gew.-% oder größer ist.

4. Ferritedelstahl mit ausgezeichneter Festigkeit und Dehnung nach Anspruch 1, wobei ein Wert von 10^{∗}[A(%)]+1000^{∗}[B(Gew.-%)] 6,5 oder größer ist, wobei A die Gleichgewichtsaustenitfraktion bei 1000 °C und B die Gleichgewichtskohlenstoffkonzentration ist, die bei 1000 °C in Austenit vorliegt.

5. Verfahren zum Herstellen von Ferritedelstahl mit ausgezeichneter Festigkeit und Dehnung, umfassend:
Erstellen einer Bramme, die, in Gew.-%, C: 0,065 % bis 0,09 %, N: 0,035 % bis 0,06 %, Si: 0,6 % bis 1,0 %, Mn: 0,01 % bis 0,70 %, P: 0,001 % bis 0,035 %, S: 0,001 % bis 0,005 %, Cr: 15,0 % bis 17,0 %, Ni: 0,001 % bis 0,50 %, Cu: 0,001 % bis 0,50 %, den Rest Fe und unvermeidbare Verunreinigungen beinhaltet, und einen Wert von Γ=2^{∗}[Si]+10([C]+[N]) von 2,2 oder größer aufweist; und
Warmwalzen, teilweises Warmglühen, Kaltwalzen und Kaltglühen der Bramme,
wobei ein Wert des Flächenverhältnisses (das folgende Ω) auf einer Mikrostruktur einer Querrichtungsoberfläche des Stahlblechs nach dem teilweisen Warmglühen 0,2 bis 0,5 erfüllt. (Ω =[Fläche der nicht geglühten verformten Struktur]/[Fläche der nicht geglühten verformten Struktur+Fläche der rückgewonnenen und rekristallisierten Struktur]).

6. Verfahren zum Herstellen von Ferritedelstahl mit ausgezeichneter Festigkeit und Dehnung nach Anspruch 5, wobei das teilweise Warmglühen ein Chargenglühen des warmgewalzten Stahlblechs für 3 bis 5 Stunden in einem Temperaturbereich von 780°C bis 850 °C ist.

7. Verfahren zum Herstellen von Ferritedelstahl mit ausgezeichneter Festigkeit und Dehnung nach Anspruch 5, wobei die Zugfestigkeit (*tensile strength* - TS) des Stahlblechs, das das Kaltglühen durchlaufen hat, 520 MPa oder größer ist und ein Wert von ξ=[TS(MPa)]+10[EL(%)] 780 oder größer ist.

8. Verfahren zum Herstellen von Ferritedelstahl mit ausgezeichneter Festigkeit und Dehnung nach Anspruch 5, wobei durch Ausführen von Blankglühen in einem Bereich von 800°C bis 900 °C nach dem Kaltglühen eine maximale Konzentration von Si, das in einer Passivzustandsschicht des Si-Oxids beinhaltet ist, die auf einer Oberfläche des Stahlblechs ausgebildet ist, 20 Gew.-% oder größer ist.

## Revendications

1. Acier inoxydable ferritique présentant une résistance et un allongement excellents comprenant, en % en poids, C : 0,065 % à 0,09 %, N : 0,035 % à 0,06%, Si : 0,6 % à 1,0 %, Mn : 0,01 % à 0,70 %, P : 0,001 % à 0,035 %, S : 0,001 % à 0,005 %, Cr : 15,0 % à 17,0 %, Ni : 0,001 % à 0,50 %, Cu : 0,001 % à 0,50 %, le reste de Fe et des impuretés inévitables, une valeur de Γ = 2 ^{∗} [Si] + 10([C] + [N]) étant égale ou supérieure à 2,2, et un rapport de surface Ω = [surface de la structure déformée et non recuite]/[surface de la structure déformée et non recuite + surface de la structure récupérée et recristallisée] sur une microstructure d'une surface de direction transversale de la tôle d'acier après un recuit partiel à chaud étant compris entre 0,2 et 0,5.

2. Acier inoxydable ferritique présentant une résistance et un allongement excellents selon la revendication 1, **caractérisé en ce que** les valeurs de résistance à la traction TSo, TS₄₅ et TS₉₀ sont toutes égales ou supérieures à 520 MPa dans les trois directions 0°, 45° et 90° par rapport à une direction de laminage après un recuit à froid, et les valeurs ξ₀, ξ₄₅ et ξ₉₀ qui sont ξ = [TS (MPa)] + 10 [EL (%)] sont toutes égales ou supérieures à 780 dans les trois directions 0°, 45° et 90° par rapport à la direction de laminage.

3. Acier inoxydable ferritique présentant une résistance et un allongement excellents selon la revendication 1, dans lequel une concentration maximale de Si comprise dans une couche passive en oxyde de Si formée sur une surface de la tôle d'acier après un recuit blanc est égale ou supérieure à 20 % en poids.

4. Acier inoxydable ferritique présentant une résistance et un allongement excellents selon la revendication 1, dans lequel une valeur de 10 ^{∗} [A(%)] + 1000 ^{∗} [B(% en poids)] est égale ou supérieure à 6,5, A représentant la fraction d'austénite à l'équilibre à 1 000°C et B représentant la concentration de carbone à l'équilibre présente dans l'austénite à 1 000°C.

5. Procédé de fabrication d'acier inoxydable ferritique présentant une résistance et un allongement excellents, comprenant :
la préparation d'une brame comportant, en % en poids, C : 0,065 % à 0,09 %, N : 0,035 % à 0,06 %, Si : 0,6 % à 1,0 %, Mn : 0,01 % à 0,70 %, P : 0,001 % à 0,035 %, S : 0,001 % à 0,005 %, Cr : 15,0 % à 17,0 %, Ni : 0,001 % à 0,50 %, Cu : 0,001 % à 0,50 %, le reste de Fe et des impuretés inévitables, et ayant Γ = 2 ^{∗} [Si] + 10([C] + [N]) de valeur supérieure ou égale à 2,2 ; et
le laminage à chaud, le recuit partiellement à chaud, le laminage à froid et le recuit à froid de la brame, une valeur de rapport de surface (la Ω suivante) sur une microstructure d'une surface de direction transversale de la tôle d'acier après le recuit partiel à chaud étant comprise entre 0,2 à 0,5. (Ω = [surface de la structure déformée et non recuite]/[surface de la structure déformée et non recuite + surface de la structure récupérée et recristallisée]).

6. Procédé de fabrication d'acier inoxydable ferritique présentant une résistance et un allongement excellents selon la revendication 5, dans lequel le recuit partiel à chaud est un recuit en paquet de la tôle d'acier laminée à chaud pendant 3 à 5 heures à des niveaux de température allant de 780°C à 850°C.

7. Procédé de fabrication d'acier inoxydable ferritique présentant une résistance et un allongement excellents selon la revendication 5, dans lequel la résistance à la traction (TS) de la tôle d'acier soumise à un recuit à froid est égale ou supérieure à 520 MPa, et une valeur de ξ = [TS (MPa)] + 10 [EL (%)] est égale ou supérieure à 780.

8. Procédé de fabrication d'acier inoxydable ferritique présentant une résistance et un allongement excellents selon la revendication 5, dans lequel, en réalisant un recuit blanc à des niveaux de température allant de 800°C à 900°C après le recuit à froid, une concentration maximale de Si comprise dans une couche passive en oxyde de Si formée sur une surface de la tôle d'acier est égale ou supérieure à 20 % en poids.
